Europäisches Patentamt

(19) European Patent Office

Office européen des brevets

(11) Veröffentlichungsnummer: **0 089 075 B1**

(12) **EUROPÄISCHE PATENTSCHRIFT**

(45) Veröffentlichungstag der Patentschrift: 25.09.85

(21) Anmeldenummer: 83200256.2

(22) Anmeldetag: 19.02.83

(51) Int. Cl.⁴: **C 21 B 13/08, F 27 D 17/00**

(54) **Verfahren zur Nachverbrennung von brennbaren Bestandteilen in Abgasen von Drehrohröfen.**

(30) Priorität: 12.03.82 DE 3208987

(43) Veröffentlichungstag der Anmeldung:
21.09.83 Patentblatt 83/38

(45) Bekanntmachung des Hinweises auf die Patenterteilung:
25.09.85 Patentblatt 85/39

(84) Benannte Vertragsstaaten:
**DE GB IT**

(56) Entgegenhaltungen:
**DE - A - 2 001 563**
**DE - A - 2 005 220**
**DE - A - 2 437 245**
**DE - B - 1 039 084**
**FR - A - 1 259 048**
**US - A - 3 157 228**
**US - A - 4 040 819**

(73) Patentinhaber: **METALLGESELLSCHAFT AG,**
**Reuterweg 14 Postfach 3724, D-6000 Frankfurt/M.1 (DE)**

(72) Erfinder: **Schnabel, Wolfram, Dr.,**
**Thomas-Mann-Strasse 7, D-6270 Idstein (DE)**
Erfinder: **Scheu, Ernst, Am Eisernen Schlag 31,**
**D-6000 Frankfurt am Main (DE)**
Erfinder: **Serbent, Harry, Dr., Gustav-Hoch-Strasse 5 d,**
**D-6450 Hanau 1 (DE)**

(74) Vertreter: **Fischer, Ernst, Dr., Reuterweg 14,**
**D-6000 Frankfurt am Main 1 (DE)**

## Beschreibung

Die Erfindung betrifft ein Verfahren zur Nachverbrennung von brennbaren Bestandteilen in Abgasen von Drehrohröfen, in denen hüttenmännische Verfahren durchgeführt werden, wobei die Abgase nach Verlassen des Drehrohrofens in einer Nachbrennkammer unter Zusatz von sauerstoffhaltigen Gasen nachverbrannt werden.

Bei der Durchführung hüttenmännischer Verfahren in Drehrohröfen – wie z.B. der magnetisierenden Röstung von Eisenerzen, dem Brennen von Kalk und insbesondere der Direktreduktion von Eisenerzen zu Eisenschwamm oder dem Wälzverfahren – enthalten die Abgase des Drehrohrofens noch brennbare Bestandteile, die im Drehrohrofen nicht verbrannt werden können. Die brennbaren Bestandteile bestehen je nach angewendetem Verfahren hauptsächlich aus $CO$, $H_2$, Kohlenwasserstoffen und vom Gas mitgerissenem festem Kohlenstoff oder oxidierbaren Produkten des Verfahrens, wie z.B. dampfförmiges $Zn$ oder Blei. Relativ hoch ist der Gehalt an brennbaren Bestandteilen, wenn Kohlen mit einem hohen Anteil an flüchtigen Bestandteilen in den Drehrohrofen eingesetzt werden. Ausserdem enthalten die Abgase noch mitgerissene, nicht brennbare Flugstäube. Zur Vermeidung von Umweltbelästigungen und zur Ausnutzung des latenten Wärmeinhaltes müssen die brennbaren Bestandteile nachverbrannt werden und die Stäube aus dem Abgas entfernt werden.

Aus der US-PS 2112566 ist es bekannt, das gesamte Abgas eines Drehrohrofens oder einen Teilstrom durch einstufige Zugabe von Luft vollständig nachzuverbrennen und dann durch ein Materialbett auf einen Wanderrost zu leiten. Durch die einstufige vollständige Nachverbrennung wird die Temperatur des Gases so stark erhöht, dass die Ausmauerung der Nachverbrennungskammer thermisch stark angegriffen wird, und dass der Schmelz- oder Erweichungspunkt des Flugstaubes erreicht wird, so dass sich Ansätze bilden.

Aus der DE-PS 2001563 ist es bekannt, direkt im Anschluss an das Gasaustrittsende eines Drehrohrofens einen rohrwandgekühlten Abgaskanal anzuordnen, der in den Strahlungsraum eines Abhitzekessels einmündet. Kurz vor dem Strahlungsteil werden sauerstoffhaltige Gase eingeleitet, die eine vollständige Nachverbrennung bewirken. Ein Teilstrom des vollständig nachverbrannten Gases wird aus dem Abhitzekessel nach einer Abkühlung auf eine Temperatur unterhalb der Anbackungstemperatur der enthaltenen Teststoffe abgeleitet und zur Aufheizung der Beschickung auf einem Wanderrost verwendet. Damit kann zwar die Bildung von Ansätzen weitgehend vermieden werden, es ist aber auf jeden Fall ein direkt nachgeschalteter Abhitzekessel und damit ein beträchtlicher Aufwand erforderlich. Ausserdem muss im Strahlungsteil auf laminare Strömung geachtet werden, damit keine erweichten Feststoffe an die Wandung gelangen und zu Ansätzen führen.

Der Erfindung liegt die Aufgabe zugrunde, eine vollständige Nachverbrennung der Abgase ohne grosse thermische Beanspruchung der Wände der Nachbrennkammer und ohne Gefahr der Ansatzbildung in technisch einfacher und sicherer Weise zu ermöglichen.

Die Lösung dieser Aufgabe erfolgt erfindungsgemäss dadurch, dass in mehreren hintereinanderliegenden Stufen jeweils ein Teil der brennbaren Bestandteile durch Steuerung der jeweils zugesetzten Sauerstoffmenge nachverbrannt wird und das Gas vor dem Eintritt in die nachfolgenden Stufen durch Eindüsen von Wasser gekühlt wird.

Die Nachverbrennung erfolgt mindestens zweistufig. Wenn die Temperatur des Abgases aus dem Drehrohrofen bereits nahe an oder an der Anbackungstemperatur der mitgeführten Flugstäube liegt, wird das Gas vor dem Eintritt in die erste Stufe der Nachverbrennung durch Eindüsen von Wasser abgekühlt. Wenn die Temperatur des Abgases unter der Anbackungstemperatur liegt, ist eine Kühlung vor der ersten Stufe nicht erforderlich. Die Anbackungstemperatur ist von der Zusammensetzung der mitgerissenen Feststoffe abhängig. In die erste Stufe der Nachverbrennung wird nur so viel Sauerstoff eingeblasen, dass durch die resultierende Verbrennungswärme keine Steigerung der Gastemperatur über die Anbackungstemperatur erfolgt. Nach der ersten Stufe erfolgt eine Abkühlung durch Eindüsen von Wasser. Die Behandlung in der zweiten Stufe bzw. in weiteren Stufen erfolgt analog. Eine Kühlung nach der letzten Stufe ist nicht erforderlich. Die einzelnen Stufen in der Nachverbrennungskammer sind nicht durch Trennwände voneinander abgeteilt. Im allgemeinen besteht die Nachbrennkammer aus einem stehenden Turm, in den in gewissen Abständen übereinander Zuleitungsvorrichtungen für das sauerstoffhaltige Gas und das Wasser einmünden. An kritischen Umlenkstellen können Kühlflächen eingebaut werden, die Ansätze verhindern und eine höhere Wärmerückgewinnung ermöglichen. Weiterhin kann die Nachbrennkammer als Strahlungsteil für einen Abhitzekessel verwendet werden. Der Wärmeinhalt der nachverbrannten Abgase kann zur Vorwärmung von Einsatzgut, zur Erzeugung von heissem Wasser, Dampf oder elektrischer Energie ausgenutzt werden.

Eine vorzugsweise Ausgestaltung besteht darin, dass die sauerstoffhaltigen Gase mit Drall in die Nachbrennkammer eingeleitet werden. Die Drallerzeugung erfolgt durch tangentiales Einblasen der sauerstoffhaltigen Gase. Dadurch wird eine gute Vermischung und kontrollierte Nachverbrennung in jeder Stufe erzielt.

Eine vorzugsweise Ausgestaltung besteht darin, dass die Austrittsgeschwindigkeit der sauerstoffhaltigen Gase aus den Düsen durch Veränderung des Austrittsquerschnittes der Düsen geregelt wird. Dadurch wird ein stabiler Verlauf der Verbrennung auch bei veränderten Gasmengen erzielt, da immer eine gute Durchmischung erzielt werden kann.

Eine vorzugsweise Ausgestaltung besteht darin, dass die sauerstoffhaltigen Gase jeweils unter gegenläufigem Drall in nachfolgende Stufen der Nachverbrennung eingeleitet werden. Dadurch wird eine sehr gute Vermischung der Gase und Nachverbrennung in den einzelnen Stufen erzielt.

Eine vorzugsweise Ausgestaltung besteht darin, dass die Abgase vor dem Eintritt in die jeweils folgende Stufe der Nachverbrennung auf eine Temperatur abgekühlt werden, die kurz oberhalb der Zündtemperatur der Gase in der nächsten Stufe liegt. Im allgemeinen wird eine Temperatur von etwa 50° C über der Zündtemperatur eingestellt. Dadurch ist es möglich, eine vollständige Nachverbrennung unter günstigen Betriebsbedingungen in wenigen Stufen durchzuführen. Die Abkühlung darf jedoch nicht unter die Zündtemperatur des in die nächste Stufe eintretenden Gases erfolgen.

Eine vorzugsweise Ausgestaltung besteht darin, dass als sauerstoffhaltige Gase Entstaubungsluft von der Entladestelle und/oder den Übergabestellen der Kohle und/oder der Brechanlage für die Kohle in die Nachbrennkammer eingeleitet wird. Die Entstaubung des Transportweges der Kohle ist aus Umweltgründen erforderlich. Dies geschieht durch Absaugen von Luft an den entsprechenden Stellen. Die kohlehaltige Luft muss dann gereinigt werden, was normalerweise in Schlauchfiltern oder einer elektrostatischen Gasreinigungsanlage erfolgt. Neben den zusätzlichen Kosten besteht dabei auch die Gefahr von Kohlenstaub-Explosionen, weil die abgesaugte Entstaubungsluft kurzfristig hohe Kohlenstaubkonzentrationen aufweisen kann. Durch die Einleitung in die Nachbrennkammer können diese Nachteile vermieden werden.

*Ausführungsbeispiel:*

Die Nachbrennkammer hatte eine Höhe von 6,4 m und einen Innendurchmesser von 3,5 m.

Das Abgas eines Drehrohrofens, in dem eine Direktreduktion von Eisenerzen zu Schwammeisen erfolgte, hatte eine Temperatur von 1050° C und folgende Zusammensetzung:

58,4 Vol.-% $N_2$
18,0 Vol.-% $CO_2$
6,5 Vol.-% CO
11,5 Vol.-% $H_2O$
5,0 Vol.-% $H_2$
0,6 Vol.-% $O_2$
30 g/$Nm^3$ Staub mit
10 g/$Nm^3$ Kohlenstoff

Das Abgas wurde durch Eindüsen von Wasser auf eine Durchschnittstemperatur von 950° C abgekühlt und in die erste Stufe der Nachbrennkammer geleitet.

In der ersten Stufe wurden durch Zugabe von Luft in kontrollierter Menge 40% der brennbaren Bestandteile des Abgases verbrannt. Zwischen der ersten und zweiten Stufe wurde eine solche Wassermenge eingedüst, dass die Durchschnittstemperatur des Gases 1000° C betrug. In der zweiten Stufe wurde der Rest der brennbaren Bestandteile durch Zugabe einer kontrollierten Menge Luft vollständig verbrannt. Die Austrittstemperatur des Gases betrug 1100° C. Die Zusammensetzung war:

54,8 Vol.-% $N_2$
14,9 Vol.-% $CO_2$
29,0 Vol.-% $H_2O$
1,3 Vol.-% $O_2$

Das Gas wurde durch Eindüsen von Wasser auf eine Durchschnittstemperatur von 1000° C $\pm$ 50° C entsprechend dem Erweichungsverhalten des Staubes gekühlt, ehe es in die Abgasleitung eintrat.

Die Vorteile der Erfindung bestehen darin, dass die brennbaren gasförmigen und festen Bestandteile des Abgases in technisch einfacher Weise vollständig nachverbrannt werden können, ohne dass die Gefahr der Ansatzbildung oder Beschädigung von Auskleidungen besteht. Es ist eine vollständige Nachverbrennung ohne grossen Sauerstoffüberschuss möglich. Der Wärmeinhalt der Abgase kann weitgehend ausgenutzt werden.

## Patentansprüche

1. Verfahren zur Nachverbrennung von brennbaren Bestandteilen in Abgasen von Drehrohröfen, in denen hüttenmännische Verfahren durchgeführt werden, wobei die Abgase nach Verlassen des Drehrohrofens in einer Nachbrennkammer unter Zusatz von sauerstoffhaltigen Gasen nachverbrannt werden, dadurch gekennzeichnet, dass in mehreren hintereinanderliegenden Stufen jeweils ein Teil der brennbaren Bestandteile durch Steuerung der jeweils zugesetzten Sauerstoffmenge nachverbrannt wird und das Gas vor dem Eintritt in die nachfolgenden Stufen durch Eindüsen von Wasser gekühlt wird.

2. Verfahren nach Anspruch 1, dadurch gekennzeichnet, dass die sauerstoffhaltigen Gase mit Drall in die Nachbrennkammer eingeleitet werden.

3. Verfahren nach Anspruch 1 oder Anspruch 2, dadurch gekennzeichnet, dass die Austrittsgeschwindigkeit der sauerstoffhaltigen Gase aus den Düsen durch Veränderung des Austrittsquerschnittes der Düsen geregelt wird.

4. Verfahren nach Anspruch 2 oder Anspruch 3, dadurch gekennzeichnet, dass die sauerstoffhaltigen Gase jeweils unter gegenläufigem Drall in nachfolgende Stufen der Nachverbrennung eingeleitet werden.

5. Verfahren nach einem der Ansprüche 1 bis 4, dadurch gekennzeichnet, dass die Abgase vor dem Eintritt in die jeweils folgende Stufe der Nachverbrennung auf eine Temperatur abgekühlt werden, die kurz oberhalb der Zündtemperatur in der nächsten Stufe liegt.

6. Verfahren nach einem der Ansprüche 1 bis 5, dadurch gekennzeichnet, dass als sauerstoffhaltige Gase Entstaubungsluft von der Entladestelle und/oder den Übergabestellen der Kohle und/oder der Brechanlage für die Kohle in die Nachbrennkammer eingeleitet wird.

## Claims

1. A process of afterburning combustible constituents of exhaust gases from rotary kilns used for metallurgical processes, wherein the exhaust gases from the rotary kiln are afterburnt in an afterburning chamber supplied with oxygen-containing gases, characterized in that part of the combustible constituents is burned in each of a plurality of series-connected stages, each of which is supplied with oxygen at a controlled rate, and the gas which is about to enter each succeeding stage is cooled by injected water.

2. A process according to claim 1, characterized in that the oxygen-containing gases enter the afterburning chamber with a swirl.

3. A process according to claim 1, characterized in that the velocity of the oxygen-containing gases leaving the nozzles is controlled by a variation of the exit cross-section of the nozzles.

4. A process according to claim 2 or 3, characterized in that the oxygen-containing gases are fed into successive afterburning stages with swirls in mutually opposite senses.

5. A process according to any of claims 1 to 4, characterized in that the exhaust gases which are about to enter an afterburning stage are cooled to a temperature which is slightly above the ignition temperature of the gases in said stage.

6. A process according to any of claims 1 to 5, characterized in that the oxygen-containing gas supplied to the afterburner plant consists of dust-entraining air from locations where coal is unloaded and/or the locations where coal is transferred and/or from a crusher for coal.

**Revendications**

1. Procédé pour la postcombustion d'éléments combustibles contenus dans des gaz de fumée de fours rotatifs dans lesquels sont réalisés des processus du domaine de la sidérurgie, du type dans lequel les gaz de fumée sont, après avoir quitté le four rotatif, soumis à une postcombustion dans une chambre de postcombustion, avec addition de gaz contenant de l'oxygène, caractérisé par le fait que dans chacun de plusieurs paliers successifs une partie des éléments combustibles est soumise à une postcombustion par ajustement de la quantité d'oxygène ajoutée et que le gaz est, avant pénétration dans le palier suivant, refroidi par injection d'eau.

2. Procédé selon la revendication 1, caractérisé par le fait que les gaz contenant de l'oxygène sont introduits avec tourbillonnement dans la chambre de postcombustion.

3. Procédé selon la revendication 1 ou la revendication 2, caractérisé par le fait que la vitesse des gaz contenant de l'oxygène à la sortie des injecteurs est réglée par modification de la section transversale de sortie des injecteurs.

4. Procédé selon la revendication 2 ou la revendication 3, caractérisé par le fait que les gaz contenant de l'oxygène sont chacun introduits avec un tourbillonnement de sens contraire dans des paliers suivants de la postcombustion.

5. Procédé selon l'une des revendications 1 à 4, caractérisé par le fait que les gaz de fumée sont, avant leur entrée dans un palier suivant de la postcombustion, refroidis à une température qui se situe peu au-dessus de la température d'inflammation dans le palier suivant.

6. Procédé suivant l'une des revendications 1 à 5, caractérisé par le fait que l'on introduit dans la chambre de postcombustion, en tant que gaz contenant de l'oxygène, de l'air de dépoussiérage du poste de déchargement et/ou des points de déversement du charbon et/ou de l'installation de broyage pour le charbon.